# EUROPEAN PATENT APPLICATION

(11) **EP 2 690 285 A2**
(43) Date of publication of application: **29.01.2014**
(21) Application number: 13177476.2
(22) Date of filing: 22.07.2013
(51) Int. Cl.: F03D 7/02, F03D 7/00, F03D 11/00

(54) **Controlling tower clearance in a wind turbine**

(30) Priority: 26.07.2012 US 201213558681
(71) Applicant: General Electric Company, Schenectady, New York 12345 (US)
(72) Inventor: Kammer, Leonardo Cesar, Niskayuna, NY New York 12309 (US); Arora, Dhiraj, Glen Allen, VA Virginia 23060 (US)
(74) Representative: Bedford, Grant Richard

(57) **Abstract**

A wind turbine control system 400 includes a detecting unit 402 for adjusting a reference nodding moment of a wind turbine rotor 108 based on at least one of an aerodynamic thrust on the wind turbine rotor 108 and a speed of wind; a compensating unit 404 for determining a physical nodding moment of the wind turbine rotor, comparing the physical nodding moment with the reference nodding moment, and using the comparison to compute a pitch angle command for at least one wind turbine blade; and a driving unit 406 for changing a pitch of the at least one blade 202, 204 based on the pitch angle command to control the physical nodding moment of the wind turbine rotor 108.

## Description

The disclosure relates generally to a wind turbine and more specifically to systems and methods for adjusting the tower clearance in an operating wind turbine.

A wind turbine is designed to produce electrical energy at a wide spectrum of wind speeds. When wind of sufficient speed passes across the blades, the rotor is rotated to generate electrical energy in the generator. The design of the wind turbine is instrumental in affecting the cost of energy.

In a conventional wind turbine, the cost of energy is significantly reduced by increasing the size of the wind turbine. However, with the increase in the turbine size, particularly blade length, blade deflection becomes a challenge. Typically, blade deflection occurs due to the aerodynamic thrust acting on the rotor.

Some large wind turbines have been known to experience tower strikes in which a blade deflects to the point that it strikes the tower and is destroyed. Furthermore, many wind turbine manufacturers are reducing the cost of their wind turbines by making the blades lighter weight. This results in a more flexible blade and may increase the possibility of tower strikes. For flexible wind turbine blades to be successful on a large wind turbine, it is useful to have a control system to prevent tower strikes.

Various active techniques have been developed to control the tower clearance in the wind turbine. These techniques utilize sensors disposed on the tower and/or blades to determine a distance between the rotating blades and the tower. Based on the determined distance, control strategies are used to improve the tower clearance. However, these strategies will give the clearance information only when the blades are in front of the tower, and thus likely to be less effective for dynamically changing tower clearance.

In accordance with one embodiment described herein, a wind turbine control system comprises: a detecting unit for adjusting a reference nodding moment of a wind turbine rotor based on at least one of an aerodynamic thrust on the wind turbine rotor and a speed of wind; a compensating unit for determining a physical nodding moment of the wind turbine rotor, comparing the physical nodding moment with the reference nodding moment, and using the comparison to compute a pitch angle command for at least one wind turbine blade; and a driving unit for changing a pitch of the at least one blade based on the pitch angle command to control the physical nodding moment of the wind turbine rotor.

In accordance with another embodiment described herein, a method comprises: adjusting a reference nodding moment of a wind turbine rotor based on at least one of an aerodynamic thrust on the wind turbine rotor and a speed of wind; determining a physical nodding moment of the wind turbine rotor; computing a pitch angle command for at least one blade of the wind turbine based on a comparison of the physical nodding moment with the reference nodding moment; changing a pitch of the at least one blade based on the pitch angle command to control the physical nodding moment of the wind turbine rotor.

In accordance with another embodiment described herein, a wind turbine comprises: a rotor comprising at least one wind blade; a controller programmed for performing the steps of: adjusting a reference nodding moment of the rotor based on an aerodynamic thrust on the rotor; computing a pitch angle command based on a difference between the changed reference nodding moment and a physical nodding moment of the rotor; and changing a pitch of the at least one blade based on the pitch angle command to control the physical nodding moment of the rotor.

Various features, aspects, and advantages of the present invention will become better understood when the following detailed description is read with reference to the accompanying drawings in which like characters represent like parts throughout the drawings, wherein:
FIG. 1 is a perspective view of a wind turbine, in accordance with aspects of the present disclosure;
FIG. 2 is a diagrammatical representation of the wind turbine of FIG. 1 depicting tower clearance, in accordance with aspects of the present disclosure;
FIG. 3 is a diagrammatical representation of the wind turbine of FIG. 1 depicting proximity sensors and a main shaft flange, in accordance with aspects of the present disclosure;
FIG. 4 is a block diagram of a control system in the wind turbine of FIG. 1, in accordance with aspects of the present disclosure; and
FIG. 5 is a flow chart illustrating a method for controlling the tower clearance in the wind turbine, in accordance with aspects of the present disclosure.

As will be described in detail hereinafter, various embodiments of an exemplary wind turbine control system for adjusting the tower clearance in an operating wind turbine and methods for adjusting the tower clearance in the operating wind turbine are presented. By employing the methods and the various embodiments of the wind turbine control systems described hereinafter, tower clearance may be easily adjusted irrespective of the size of blades in the wind turbine. Also, the wind turbine control system may help in increasing the size of the wind turbine, which in turn reduces the cost of energy.

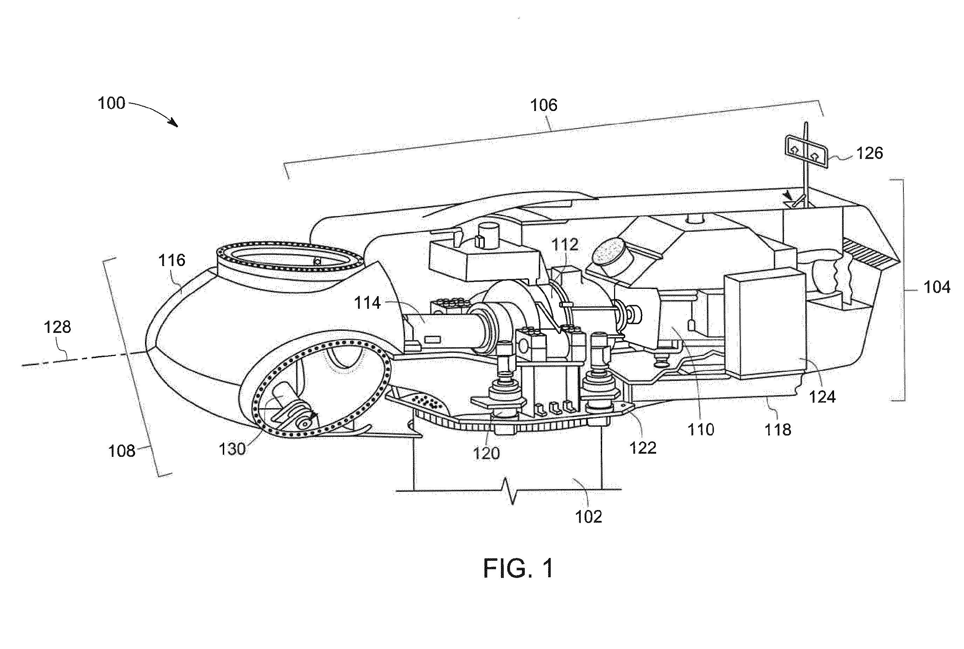

Turning now to the drawings, and referring to FIG. 1, a perspective view of a wind turbine 100, in accordance with aspects of the present disclosure, is depicted. The wind turbine 100 is configured to convert kinetic energy of wind passing across the wind turbine 100 into electrical energy. Particularly, the wind turbine 100 includes a plurality of mechanical moving parts that aid in converting the kinetic energy of the wind into mechanical energy. The mechanical energy is in turn used to generate electrical energy.

In a presently contemplated configuration, the wind turbine 100 includes a tower 102 and a power unit 104. The tower 102 operates to elevate the power unit 104 to a height above ground level or sea level at which faster moving wind passes across the wind turbine 100. The height of the tower 102 may be selected based on factors and conditions well-known in the art.

Further, the power unit 104 may be configured to convert the kinetic energy of the wind into electrical energy. The power unit 104 may include one or more sub-units such as a nacelle 106 and a rotor 108. The nacelle 106 houses components for converting the mechanical energy of the rotor 108 into electrical energy. Specifically, the nacelle 106 houses a generator 110 that is used to generate the electrical energy based on the mechanical energy provided by the rotor 108. In addition to the generator 110, the nacelle 106 may also house other components, such as, but not limited to, a gearbox 112, a rotor shaft 114, a yaw drive 120, and a control system 124.

The rotor shaft 114 is connected to a rotor hub 116 and the gearbox 112, as depicted in FIG. 1. The rotor shaft 114 may be used to drive an optional high speed shaft (not shown in FIG. 1) that is enclosed within the gearbox 112 and may further drive a generator 110 that is mounted on a main frame 118 to generate the electrical energy. In one embodiment, the gearbox 112 and the rotor shaft 114 may be configured to operate, control, and/or optimize the performance of the wind turbine 100. Further, the yaw drive 120 and a yaw deck 122 may provide a yaw control system for the wind turbine 100. In one embodiment, the yaw control system may be electrically operated and controlled by the control system 124 based on the information received from a wind vane 126 mounted on the nacelle 106.

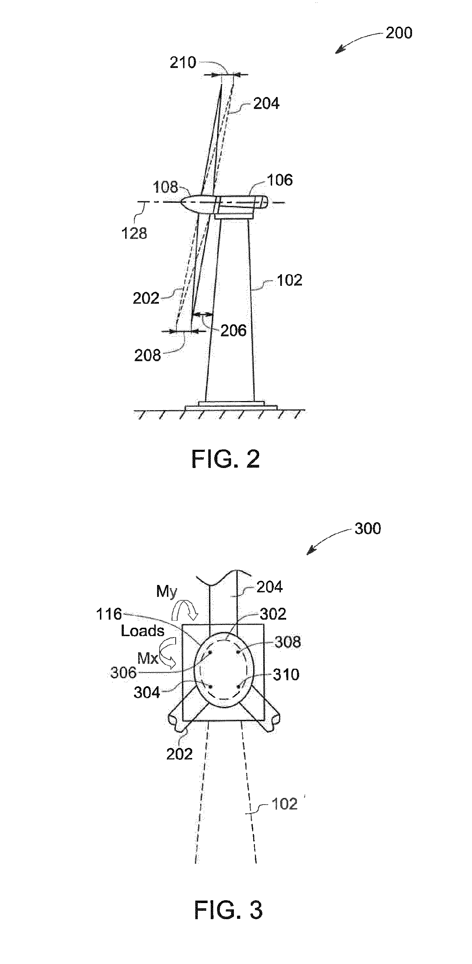

Moreover, as previously noted, the rotor 108 is configured to convert the kinetic energy of wind passing across the wind turbine 100 into mechanical energy. This converted mechanical energy is further provided to the generator 110 for generating electrical energy. In the presently contemplated configuration, the rotor 108 is operatively coupled to the rotor shaft 114 via a bearing assembly. The rotor 108 includes the rotor hub 116 and a plurality of blades (shown in FIG. 2) that project outwardly from the rotor hub 116 at locations circumferentially distributed thereabout. In the example depicted in FIG. 1, the rotor hub 116 is shown as including three blades. However, the number of blades may vary. The blades are configured to interact with passing air flow to produce lift that causes the rotor hub 116 to rotate about a longitudinal axis 128. Further, by rotating the rotor hub 116, the rotor shaft 114 coupled to the rotor hub 116 also rotates causing the generator 110 to generate electrical energy.

In accordance with the embodiment of FIG. 1, the control system 124 may include one or more microcontrollers (not shown in FIG. 1) that are used for overall system monitoring and controlling of the wind turbine 100. In one example, the system monitoring and controlling may include pitch and speed regulation, high-speed shaft and yaw brake control, yaw and pump motor control, and fault monitoring. Further, the control system 124 may provide control signals to a pitch drive 130 to control a pitch of the blades. In one embodiment, the pitch of the blades may be individually controlled by the pitch drive 130. For example, each blade may have a separate pitch drive 130 that varies or changes the pitch of the corresponding blade based on the control signal received from the control system 124.

As will be appreciated, the wind turbine 100 is designed to generate electrical energy over a wide range of wind speeds. However, in a particular range of wind speeds, for example 80-120% of the rated wind speed, the rotor 108 may undergo high aerodynamic thrust loading of the rotor. In some instances, this thrust loading may deflect the blade or the rotor to the point that exceeds the safety margins established for turbine certification. In some circumstances, a blade might strike the tower 102 causing a destruction of the wind turbine.

To address these problems, in accordance with exemplary aspects of the present disclosure, the wind turbine 100 may include the control system 124 that controls the physical nodding moment of the wind turbine rotor 108, which in turn improves tower clearance of the wind turbine 100. The tower clearance may be referred to as a clearance provided for the blades to rotate without striking the tower or more specifically as a distance maintained between the tower and the rotating blades to prevent the rotating blades from striking the tower.

In accordance with one embodiment, the control system 124 adjusts a reference nodding moment of the rotor 108 according to the aerodynamic thrust of the wind passing across the wind turbine 100. The reference nodding moment is referred to as a reference value or data set point that is pre-stored within the control system 124 for monitoring a physical nodding moment of the rotor 108. In one example, if the aerodynamic thrust of the wind is above a threshold value, the control system 124 may adjust the pre-stored reference nodding moment value corresponding to the aerodynamic thrust.

As the speed of the wind can be one indicator of aerodynamic thrust, in accordance with another embodiment, the control system 124 adjusts a reference nodding moment of the rotor 108 according to the speed of the wind passing across the wind turbine 100. In one example, if the speed of the wind is within a range of about 80% to about 120% of the rated wind speed, the control system 124 may adjust the pre-stored reference nodding moment value corresponding to the speed of the wind.

Further, the control system 124 may compare the physical nodding moment of the rotor 108 with the adjusted reference nodding moment to compute an asymmetric pitch angle command for each of the blades. In one embodiment, the control system 124 also factors in the rotor position (azimuth) of each individual blade when making the computations. The computed pitch angle command is sent to the pitch drive 130 to change the pitch of each of the blades. Particularly, the blades are moved or rotated by an angle included in the pitch angle command to change the aerodynamic forces acting on the rotating blades, which in turn controls the physical nodding moment of the rotor 108. Also, this change in the aerodynamic forces on the rotating blades may further reduce the magnitude and/or the duration of aerodynamic thrust load placed on the rotor 108. By reducing the aerodynamic thrust load on the rotor 108, the tower clearance of the wind turbine 100 is improved. The aspect of adjusting the tower clearance in the wind turbine 100 will be explained in greater detail with reference to FIGs. 2-4.

Referring to FIG. 2, a diagrammatical representation of the wind turbine 200, in accordance with aspects of the present disclosure, is depicted. FIG. 2 illustrates turbine blades 202, 204 coupled to the rotor hub 116. The turbine blades 202, 204 are rotated at their initial position or "no load" position with a tower clearance 206. The tower clearance 206 may be referred to as the distance between the tower 102 and the blade that is in front of the tower 102. Further, when an aerodynamic thrust load acts on the rotor 108, the blades 202, 204 of the rotor 108 may deflect towards the tower 102. The aerodynamic thrust load on the rotor 108 may be due to high speed wind passing across the rotor 108. For example, high aerodynamic thrust loads may occur when the speed of the wind is in a range of about 80 to about 120% of the rated wind speed.

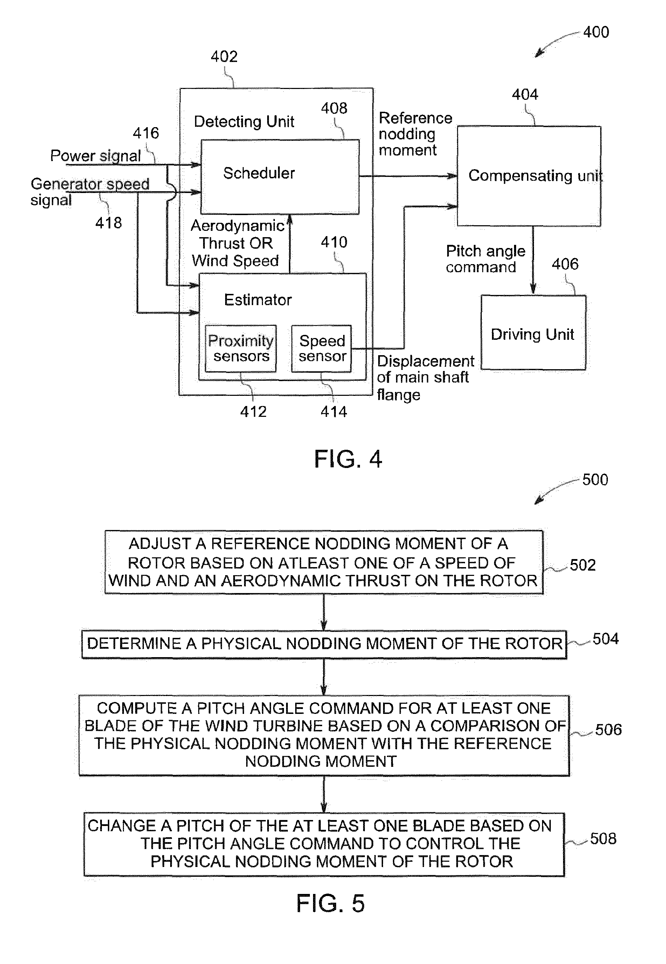

In operation, the deflection of the blades 202, 204 may reduce the distance 206 between the blades and the tower, and one or more blades may strike the tower 102. To reduce fatigue caused by the aerodynamic thrust loading on the rotor 108, the control system 124 may be used to control the physical nodding moment of the rotor 108, which in turn improves the tower clearance of the wind turbine 200. Particularly, in response to the deflection of the rotor 108 and/or other components of the wind turbine 200, the control system 124 may change the pitch of the blades so that the distance between the tower and the blade 202 is increased by an additional distance 208, which in turn improves the tower clearance of the wind turbine 200. More specifically, in one embodiment, the control system 124 may change the pitch of the blades so that the blade 202 that is in front of the tower 102 is pushed away from the tower 102 by the distance 208, while the blade 204 that is on the top of the tower 102 is moved closer to the tower 102 by a distance 210. The pitch of each of the blades is changed corresponding to the asymmetric pitch angles determined by the control system 124. The aspect of determining the asymmetric pitch angles will be explained in greater detail with reference to FIG. 4.

FIG. 3 is a diagrammatical representation of a wind turbine depicting proximity sensors and a main shaft flange, in accordance with aspects of the present disclosure. The wind turbine 300 includes a main shaft flange 302 that is positioned around the rotor shaft 114 (shown in FIG. 1). Particularly, the main shaft flange 302 is disposed on a portion of the rotor shaft 114 that is adjacent to the rotor hub 116 (shown in FIG. 1). In addition, to the main shaft flange 302, the wind turbine 300 includes one or more proximity sensors 304, 306, 308, 310 to measure the displacement of the main shaft flange 302. For example, the deflection of the rotor 108 may displace the main shaft flange 302 from a predetermined resting or "no load" position. In one embodiment, the one or more proximity sensors 304, 306, 308, 310 may be used to measure the displacement of the main shaft flange 302 relative to a non-deflecting reference frame. The non-deflecting reference frame may comprise, for example, the bedplate or the housing of the low-speed shaft main bearing.

In the embodiment of FIG. 3, the four proximity sensors 304-310 are positioned 90 degrees apart on the surface of the main shaft flange 302. The proximity sensors 304-310 may generate signals in response to deflection of the wind turbine components, such as the rotor 108 and the main shaft flange 302. In one specific embodiment, the signals are generated when the wind speed is within a predetermined range, for example 80-120% of the rated wind speed, as the aerodynamic thrust load may act across the rotor in this range. This aerodynamic thrust load may further deflect the rotor causing displacement of the main shaft flange. The proximity sensors 304-310 are used to measure the displacement of the main shaft flange 302 and send the generated signals that indicate the displacement of the main shaft flange 302 to the control system 124 for determining the physical nodding moment of the rotor 108.

Operationally, the control system 124 may first determine the "no load" position during an initialization process. The "no load" position may be determined using turbine controller computations of the main shaft flange sensor signals during a rotor slow roll operation. In one embodiment, this process may occur at system start-up with all rotor blades pitched to, for example, 65 degrees.

Further, during the operation of the wind turbine 300, the control system 124 may determine the load on the blades that deflect the rotor 108 using the data or signals from the proximity sensors 304-310. In one embodiment, these signals may indicate the displacement of the main shaft flange 302 which is due to the deflection of the rotor 108. With this data or information, the control system 124 may change the pitch of the blades to reduce the aerodynamic thrust load on the blades. The aspect of reducing the aerodynamic thrust load and adjusting the tower clearance will be explained in greater detail with reference to FIG. 4.

Referring to FIG. 4, a block diagram of a control system, in accordance with aspects of the present disclosure, is depicted. For ease of understanding of the present disclosure, the control system 400 is described with reference to the components of FIG. 1. The control system 400 may be representative of the control system 124 of FIG. 1. The control system 400 may be configured for overall system monitoring and controlling of the wind turbine 100. In one example, the system monitoring and controlling may include pitch and speed regulation of the blades, high-speed shaft and yaw brake application, yaw and pump motor application, and fault monitoring.

In the embodiment of FIG. 4, the control system 400 may be used to adjust the tower clearance of the wind turbine 100. The control system 400 includes a detecting unit 402, a compensating unit 404, and a driving unit 406. The detecting unit 402 is configured to adjust a reference nodding moment of the wind turbine rotor 108. The reference nodding moment is referred to as a set point or reference value for the physical nodding moment of the rotor 108. Also, this reference nodding moment may be pre-stored prior to the operation of the wind turbine 100. In one embodiment, the reference nodding moment value may be selected and stored in the control system 124 based on a standard wind speed rate of the wind turbine 100.

In the presently contemplated configuration, the detecting unit 402 includes a scheduler 408 and an estimator 410. The estimator 410 may be configured to determine the aerodynamic thrust. Particularly, the estimator 410 receives a power signal 416 and a generator speed signal 418 from the generator 150. The power signal 416 may indicate maximum power produced by the generator 110. Similarly, the generator speed signal 418 may indicate a rotational speed of a generator rotor disposed within the generator 110. Thereafter, the estimator 410 utilizes the received power signal 416 and the generator speed signal 418 to determine the aerodynamic thrust on the rotor. If desired, an average angle of the blades coupled to the rotor hub 116 may be used in addition to the power produced by the generator 110 and/or the speed of the generator 110 to determine the aerodynamic thrust on the rotor.

In another embodiment, the estimator 410 utilizes the received power signal 416, the generator speed signal 418, and the average angle of the blades coupled to the rotor hub 116 to determine the speed of the wind passing across the wind turbine 100. For example, if the wind of a particular speed passes across the rotor 108, the blades that are positioned at a particular angle may interact with passing air flow or the wind to produce a lift that causes the rotor hub 116 to rotate about a longitudinal axis 128. This rotary motion of the rotor hub 116 may further rotate the generator rotor, which in turn produces electrical power at an output of the generator 110. Thus, by knowing the average blade angle, the power produced by the generator 110, and the speed of the generator rotor, the estimator 410 may determine the speed of the wind passing across the wind turbine 100. In another additional or alternative embodiment, one or more speed sensors 414 may be used to determine or predict the speed of the wind. Thereafter, the estimator 410 may provide the determined speed of the wind to the scheduler 408.

In addition to determining the aerodynamic thrust and/or speed of the wind, the estimator 410 may also measure a displacement of the main shaft flange 302. To that end, the estimator 410 may include one or more proximity sensors 412. The proximity sensors 412 may be representative of the proximity sensors 304-310 of FIG. 3. Further, these proximity sensors 304-310 may be used for measuring a displacement of the main shaft flange 302. Particularly, the rotor 108 may undergo high aerodynamic thrust loading when the wind at a very high speed passes across the rotor 108. This high aerodynamic thrust loading on the rotor 108 may deflect the rotor 108, which in turn displaces the main shaft flange 302 from an initial position or a predetermined position. In one embodiment, the main shaft flange 302 may displace fro a fixed frame or a reference frame. Further, upon measuring the displacement of the main shaft flange 302, the estimator 410 may send the measured displacement of the main shaft flange 302 to the compensating unit 404.

In accordance with aspects of the present disclosure, the scheduler 408 receives the determined aerodynamic thrust on the rotor 108 and/or wind speed from the estimator 410 and uses the aerodynamic thrust on the rotor 108 and/or wind speed to change or adjust the reference nodding moment value. In one embodiment, the scheduler 408 may first verify whether the determined aerodynamic thrust on the rotor 108 is above a predetermined value. If yes, then the scheduler 408 may change or adjust the reference nodding moment value corresponding to the increase in the aerodynamic thrust on the rotor 108 from the predetermined value.

In another embodiment, the scheduler 408 receives the speed of the wind from the estimator 410 and uses that speed to change the reference nodding moment value. The scheduler 408 may first verify whether the speed of the wind is within a pre-determined range. For example, the pre-determined range may be 80-120% of the rated wind speed. If the speed of the wind is within this pre-determined range, the scheduler 408 changes or adjusts the reference nodding moment value. In one embodiment, the scheduler 408 may use a look-up table for changing the reference nodding moment value. For example, the look-up table may include the reference nodding moment values associated with their corresponding wind speeds. The scheduler 408 may select a value of the reference nodding moment that is associated with the determined speed of the wind from the look-up table. Thereafter, the scheduler 408 may send the changed reference nodding moment of the rotor 108 to the compensating unit 404.

In accordance with aspects of the present disclosure, the compensating unit 404 is configured to receive the changed reference nodding moment from the scheduler 408 and the measured displacement of the main shaft flange from the estimator 410. Further, the compensating unit 404 may use the measured displacement of the main shaft flange 302 to determine the physical nodding moment of the wind turbine rotor 108. In one embodiment, the compensating unit 404 may have a look-up that includes different physical nodding moments that are mapped to corresponding displacement values of the main shaft flange 302. The compensating unit 404 may use this look-up table to determine the physical nodding moment that is associated with the measured displacement value of the main shaft flange 302.

Further, upon determining the physical nodding moment of the rotor 108, the compensating unit 404 may compare this physical nodding moment with the changed reference nodding moment received from the scheduler 408. Particularly, the compensating unit 404 identifies a difference between the physical nodding moment and the reference nodding moment of the rotor 108. If the difference between these nodding moments is above a predefined value, the compensating unit 404 may compute an asymmetric pitch angle command corresponding to the difference between the physical nodding moment and the reference nodding moment of the rotor 108. The pitch angle command may include one or more asymmetric pitch angles for each of the blades. In one embodiment, a Parks DQ transformation, a bias estimation method calculation, and/or other control technique is used to calculate the pitch angle or pitch increment for each rotor blade to reduce the overall asymmetric rotor loading.

Thereafter, the asymmetric pitch angle command is provided to the driving unit 406 for changing the pitch of the at least one of the blades. Particularly, the driving unit 406 may employ one or more pitch drives 120 for changing the pitch of the blades. In one embodiment, these asymmetric pitch angles are provided to the blades in such a way that the average pitch angle adjustment of the blades is zero. For example, if the pitch angle of one of the blades is incremented by +1 degree, then the pitch angle of the other two blades are decremented by -0.8 degrees and -0.2 degrees. The pitch drive 120 is used to move or rotate the corresponding blade by an angle associated with its pitch angle. By changing the pitch of the blades, the physical nodding moment of the rotor 108 is controlled. Also, by changing the pitch of the blades, the rotational movement of the blades may be varied, which in turn changes the aerodynamic forces acting on the rotor 108, particularly the blades. This change in the aerodynamic forces on the rotor 108 may mitigate the aerodynamic thrust load on the rotor 108. By reducing the aerodynamic thrust load, the distance between the tower 102 and the blades may be improved. Thus, the control system improves or adjusts the tower clearance of the wind turbine 100 for the varying speed of the wind.

Referring to FIG. 5, a flow chart illustrating a method for controlling a tower clearance in the wind turbine, in accordance with aspects of the present disclosure, is depicted. For ease of understanding of the present disclosure, the method is described with reference to the components of FIGs. 1-4. The method begins at step 502, where a reference nodding moment of the wind turbine rotor 108 is adjusted based on an aerodynamic thrust on the rotor and/or the wind speed. To that end, a detecting unit 402 is used for adjusting the reference nodding moment of the rotor 108. In one embodiment, the aerodynamic thrust on the rotor is determined based on at least one of an average angle of a plurality of blades, a power produced by a generator 110, a speed of the generator 110, and a wind-speed sensor measurement. Further, if the determined aerodynamic thrust on the rotor is above a predetermined value, the reference nodding moment of the rotor 108 may be changed corresponding to the determined aerodynamic thrust on the rotor. In another embodiment, a wind speed sensor may be used or the detecting unit 402 may determine the speed of the wind based on at least one of an average angle of a plurality of blades, a power produced by a generator 110, and a speed of the generator 110. Further, if the determined speed of the wind is within a predetermined range, the reference nodding moment of the rotor 108 may be changed corresponding to the speed of the wind.

Further, at step 504, a physical nodding moment of the rotor 108 is determined. Particularly, the proximity sensors 304-310 may measure the displacement of the main shaft flange 302 from a fixed frame or from a predetermined position. Thereafter, a compensating unit 404 may determine the physical nodding moment of the rotor 108 based on the measured displacement of the main shaft flange 302.

Additionally, at step 506, a pitch angle command is computed based on a comparison of the physical nodding moment with the reference nodding moment. To that end, the compensating unit 404 is configured to compute the pitch angle command. Particularly, the compensating unit 404 compares a value of the physical nodding moment with a value of the reference nodding moment. If the difference between these values is above a predefined value, then the compensating unit 404 computes the pitch angle command that is corresponding to the difference between these values. In one embodiment, the computed pitch angle command may include asymmetric pitch angles.

Further, at step 508, a pitch of the at least one rotor blade is changed based on the pitch angle command to control the tower clearance. To that end, the driving unit 406 is used to change the pitch of the blades. Particularly, the driving unit 406 may send a driving signal including the asymmetric pitch angle to each of the pitch drive 120 for changing the pitch of the blades. For example, one of the blades may be rotated by an angle of 2 degrees, while the other two blades may be rotated by angles of -1.5 degrees and -0.5 degree. The pitch of the blades is changed to control the physical nodding moment of the rotor 108. Also, by changing the pitch of the blades, the aerodynamic force acting on the wind turbine 100 is changed, which in turn reduces the aerodynamic thrust load acting on the rotor 108. Further, by reducing the aerodynamic thrust load on the rotor 108, the deflection of the rotor 108 is prevented, which in turn improves or adjusts the tower clearance of the wind turbine 100.

The various embodiments of the system and the method in the wind turbine may aid in controlling a tower clearance of the wind turbine. Also, the wind turbine may includes a control system that helps in operating the wind turbine at a wide range of wind speeds. Additionally, since the tower clearance can be easily controlled over a wide range of wind speeds, the size of the wind turbine and/or the length of the blades may be increased, which in turn reduces the cost of the electrical energy generated by the wind turbine.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A wind turbine control system comprising:
   a detecting unit for adjusting a reference nodding moment of a wind turbine rotor based on at least one of an aerodynamic thrust on the wind turbine rotor and a speed of wind;
   a compensating unit for determining a physical nodding moment of the wind turbine rotor, comparing the physical nodding moment with the reference nodding moment, and using the comparison to compute a pitch angle command for at least one wind turbine blade; and
   a driving unit for changing a pitch of the at least one blade based on the pitch angle command to control the physical nodding moment of the wind turbine rotor.
2. The wind turbine of clause 1, wherein the detecting unit comprises:
   an estimator for determining the at least one of the aerodynamic thrust on the wind turbine rotor and the speed of the wind based on at least one of an average angle of a plurality of blades including the at least one blade, a power produced by a generator, and a speed of the generator; and
   a scheduler for changing the reference nodding moment based on the determined aerodynamic thrust on the wind turbine rotor.
3. The wind turbine of any preceding clause, wherein the estimator comprises at least one speed sensor disposed on the wind turbine rotor to determine the speed of the wind passing across the wind turbine.
4. The wind turbine of any preceding clause, wherein the scheduler is configured to adjust the reference nodding moment when at least one of the determined aerodynamic thrust is above a predetermined value and the determined speed of the wind is within a predetermined range.
5. The wind turbine of any preceding clause, wherein the estimator further comprises at least one proximity sensor for measuring a displacement of a main shaft flange.
6. The wind turbine of any preceding clause, wherein the compensating unit is configured to receive the measured displacement of the main shaft flange and use the measured displacement to determine the physical nodding moment of the wind turbine rotor.
7. The wind turbine of any preceding clause, wherein the at least one proximity sensor is coupled to a main shaft flange of the wind turbine.
8. A method for optimizing tower clearance of a wind turbine, the method comprising:
   adjusting a reference nodding moment of a wind turbine rotor based on at least one of an aerodynamic thrust on the wind turbine rotor and a speed of wind;
   determining a physical nodding moment of the wind turbine rotor;
   computing a pitch angle command for at least one blade of the wind turbine based on a comparison of the physical nodding moment with the reference nodding moment; and
   changing a pitch of the at least one blade based on the pitch angle command to control the physical nodding moment of the wind turbine rotor.
9. The method of any preceding clause, further comprising: prior to adjusting the reference nodding moment, determining the at least one of the aerodynamic thrust on the wind turbine rotor and the speed of the wind based on at least one of an average angle of a plurality of blades including the at least one blade, a power produced by a generator, and a speed of the generator.
10. The method of any preceding clause, wherein adjusting the reference nodding moment comprises:
   adjusting the reference nodding moment when the determined speed of the wind is within a predetermined range or the determined aerodynamic thrust on the wind turbine rotor is above a predetermined value.
11. The method of any preceding clause, wherein determining the physical nodding moment of the rotor comprises:
   measuring a displacement of a main shaft flange from a fixed position; and
   determining the nodding moment of the rotor based on the measured displacement of the main shaft flange.
12. The method of any preceding clause, wherein computing the pitch angle command comprises computing the pitch angle command based on a difference between the physical nodding moment with the adjusted reference nodding moment.
13. The method of any preceding clause, wherein changing the pitch of the at least one blade comprises rotating the at least one blade by a distance corresponding to the computed pitch angle to mitigate a load causing deflection of at least the rotor.
14. A wind turbine comprising:
   a rotor comprising at least one wind blade;
   a controller programmed for performing the steps of:
      adjusting a reference nodding moment of the rotor based on an aerodynamic thrust on the rotor;
      computing a pitch angle command based on a difference between the changed reference nodding moment and a physical nodding moment of the rotor; and
      changing a pitch of the at least one blade based on the pitch angle command to control the physical nodding moment of the rotor.
15. The wind turbine of any preceding clause, wherein the controller further comprises:
   an estimator for determining the aerodynamic thrust on the rotor;
   a scheduler for adjusting the reference nodding moment when the aerodynamic thrust on the wind turbine rotor is above a predetermined value.
16. The wind turbine of any preceding clause, wherein the estimator comprises at least one proximity sensor for measuring a displacement of a main shaft flange.
17. The wind turbine of any preceding clause, wherein the controller further comprises a compensating unit configured to receive the measured displacement of the main shaft flange and use the measured displacement to determine the physical nodding moment of the wind turbine rotor.
18. The wind turbine of any preceding clause, wherein the controller is configured to adjust the pitch angle command only when the difference between the reference nodding moment and the physical current nodding moment of the rotor is above a predefined value.

## Claims

1. A wind turbine control system (400) comprising:
a detecting unit (402) for adjusting a reference nodding moment of a wind turbine rotor (108) based on at least one of an aerodynamic thrust on the wind turbine rotor (108) and a speed of wind;
a compensating unit (404) for determining a physical nodding moment of the wind turbine rotor (108), comparing the physical nodding moment with the reference nodding moment, and using the comparison to compute a pitch angle command for at least one wind turbine blade (202, 204); and
a driving unit (406) for changing a pitch of the at least one blade (202, 204) based on the pitch angle command to control the physical nodding moment of the wind turbine rotor (108).

2. The wind turbine of claim 1, wherein the detecting unit (402) comprises:
an estimator (410) for determining the at least one of the aerodynamic thrust on the wind turbine rotor (108) and the speed of the wind based on at least one of an average angle of a plurality of blades (202, 204) including the at least one blade, a power produced by a generator (110), and a speed of the generator (110); and
a scheduler (408) for changing the reference nodding moment based on the determined aerodynamic thrust on the wind turbine rotor (108).

3. The wind turbine of claim 2, wherein the scheduler (408) is configured to adjust the reference nodding moment when at least one of the determined aerodynamic thrust is above a predetermined value and the determined speed of the wind is within a predetermined range.

4. The wind turbine of claim 2 or claim 3, wherein the estimator (410) further comprises at least one proximity sensor (412) for measuring a displacement of a main shaft flange.

5. The wind turbine of any preceding claim, wherein the compensating unit (404) is configured to receive the measured displacement of the main shaft flange and use the measured displacement to determine the physical nodding moment of the wind turbine rotor (108).

6. A method for optimizing tower clearance of a wind turbine (100), the method comprising:
adjusting a reference nodding moment of a wind turbine rotor (108) based on at least one of an aerodynamic thrust on the wind turbine rotor (108) and a speed of wind;
determining a physical nodding moment of the wind turbine rotor (108);
computing a pitch angle command for at least one blade (202, 204) of the wind turbine (100) based on a comparison of the physical nodding moment with the reference nodding moment; and
changing a pitch of the at least one blade (202, 204) based on the pitch angle command to control the physical nodding moment of the wind turbine rotor (108).

7. The method of claim 6, further comprising: prior to adjusting the reference nodding moment, determining the at least one of the aerodynamic thrust on the wind turbine rotor (108) and the speed of the wind based on at least one of an average angle of a plurality of blades (202, 204) including the at least one blade, a power produced by a generator (110), and a speed of the generator (110).

8. The method of claim 6 or claim 7, wherein adjusting the reference nodding moment comprises:
adjusting the reference nodding moment when the determined speed of the wind is within a predetermined range or the determined aerodynamic thrust on the wind turbine rotor (108) is above a predetermined value.

9. The method of any of claims 6 to 8, wherein determining the physical nodding moment of the rotor comprises:
measuring a displacement of a main shaft flange (302) from a fixed position; and
determining the nodding moment of the rotor (108) based on the measured displacement of the main shaft flange (302).

10. The method of any of claims 6 to 9, wherein computing the pitch angle command comprises computing the pitch angle command based on a difference between the physical nodding moment with the adjusted reference nodding moment.

11. The method of any of claims 6 to 10, wherein changing the pitch of the at least one blade (202, 204) comprises rotating the at least one blade (202, 204) by a distance corresponding to the computed pitch angle to mitigate a load causing deflection of at least the rotor (108).

12. A wind turbine (100) comprising:
a rotor (108) comprising at least one wind blade (202, 204);
a controller (400) programmed for performing the steps of:
adjusting a reference nodding moment of the rotor (108) based on an aerodynamic thrust on the rotor (108);
computing a pitch angle command based on a difference between the changed reference nodding moment and a physical nodding moment of the rotor (108); and
changing a pitch of the at least one blade (202, 204) based on the pitch angle command to control the physical nodding moment of the rotor (108).

13. The wind turbine of claim 12, wherein the controller (400) further comprises:
an estimator (410) for determining the aerodynamic thrust on the rotor (108);
a scheduler (408) for adjusting the reference nodding moment when the aerodynamic thrust on the wind turbine rotor (108) is above a predetermined value.

14. The wind turbine of claim 13, wherein the estimator (410) comprises at least one proximity sensor (412) for measuring a displacement of a main shaft flange (302).

15. The wind turbine of any of claims 12 to 14, wherein the controller (400) further comprises a compensating unit (404) configured to receive the measured displacement of the main shaft flange (302) and use the measured displacement to determine the physical nodding moment of the wind turbine rotor (108).
